# EUROPEAN PATENT APPLICATION

(11) **EP 1 559 950 A2**
(43) Date of publication of application: **03.08.2005**
(21) Application number: 05000885.3
(22) Date of filing: 18.01.2005
(51) Int. Cl.: F21S 8/10, B60Q 1/30

(54) **Rear-signalling light for motor vehicles**

(30) Priority: 27.01.2004 IT to20040031
(71) Applicant: IDIS S.A., Luxemburg (LU)
(72) Inventor: Di Sora, Egidio, 03100 Frosinone (FR) (IT)
(74) Representative: Lotti, Giorgio

(57) **Abstract**

Described herein is a signalling light for motor vehicles made up of: a support (1) for lamp-bulbs or LEDs (3); a component element (7), made up of two symmetrical half-shells (12, 13, 17, 18) comprising a base (8, 15) and a set of reflecting dishes (11) set in a row, basically divided along the plane passing through their axes of symmetry; a shell (20) designed to be inserted by snap action on the component element (7); and a lens (22) for closing the compartment defined by said shell (20).

## Description

The present invention relates in general to a rear-signalling light for motor vehicles and in particular to the so-called "third-stop light", i.e., the light which is set at the rear top centre of the vehicle.

Currently known are lights of the aforementioned type, which normally comprise: a lamp-holder base; a printed circuit; a plastic body having a reflecting dish shape, which is normally referred to in technical terms as "reflecting dish", with an aluminizing treatment on the inside designed to direct the light beam; a variable number of lamp-bulbs, in general of the 5-Watt "W 5 W" type, inserted and fixed in the reflecting dish; and a coloured lens, generally red, which covers the compartment delimited by the aforesaid reflecting dish.

The purpose of the light is to signal slowing-down of the motor vehicle in a way that is more visible from a distance as compared to the stop lights positioned low down at the two sides of the motor vehicle.

The above type of light, which uses very small lamp-bulbs, has also a reflecting dish of dimensions that are contained and in any way appropriate to the brightness of the lamp-bulb.

One of the problems that are most frequently encountered in the production of the above lights is represented by the difficulty of depositing the atoms of aluminium in a uniform way on the internal surface of a reflecting dish of such small dimensions.

The purpose of the present invention is to provide a light which will enable a simple and economically advantageous process of fabrication for depositing the atoms of aluminium on the reflecting dish and which at the same time will preserve the contained dimensions which are optimal for low-power lamp-bulbs.

The above and other purposes are achieved by a light according to the present invention, which presents the characteristics specified in Claim 1.

Further characteristics and advantages of the invention will emerge clearly from the ensuing description with reference to the annexed plate of drawings, provided purely by way of non-limiting example, in which:
- Figure 1 is a perspective view of a component element of the light according to the invention, assembled after aluminizing, in which there may be noted a rectangular base and a row of reflecting dishes, set alongside one another;
- Figure 2 is a perspective view of the element of Figure 1 in the form of two half-shells, each comprising a half-base and half-dish divided along a plane passing through the axes of symmetry of the half-dishes, the two half-shells being joined along the bottom edge by machining bands or strips;
- Figure 3 is a perspective view of a variant embodiment of the component element of Figure 1 which has the two half-shells joined along a side edge by the machining bands or strips;
- Figure 4 is a perspective view of a further variant embodiment of the component element of Figure 1, comprising the base made of a single piece and the reflecting dishes made with two half-shells still open and joined at the base by a thin-film hinge;
- Figure 5 is a cross-sectional view of the component element of the light in the variant embodiment of Figure 4, in two positions that it can assume during assembly, the first one of which is represented by a solid line showing the element with the monolithic base and the reflecting dishes still open, the second one of which is represented by a dashed line indicating the position assumed by the half-dishes once they are joined together; and
- Figure 6 is an exploded view of the light, where all its component parts are represented.

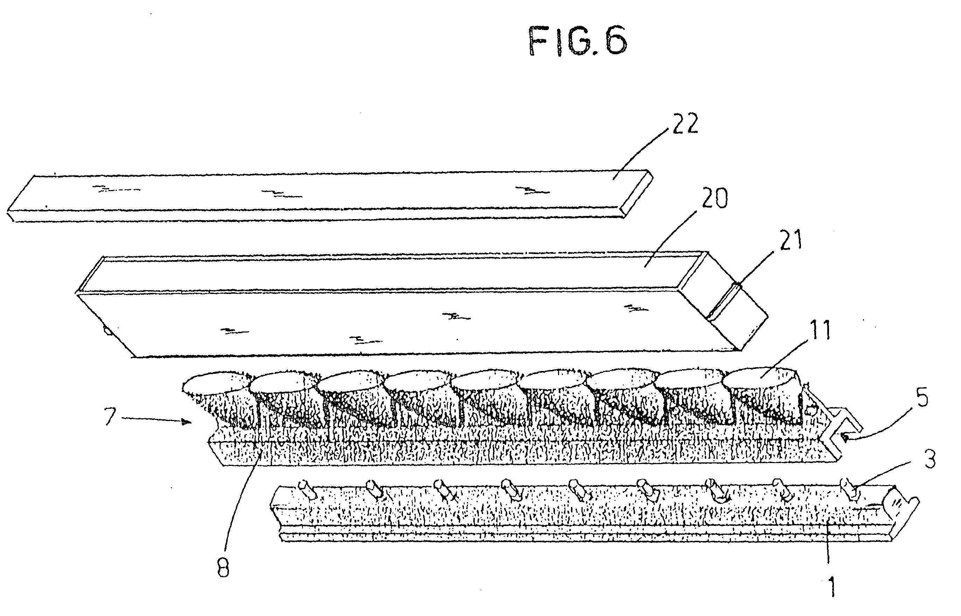

With reference to the figures, and in particular to Figure 6, there may be noted a support 1 for lamp-bulbs or LEDs 3, which comprises an electrical circuit and seats (not illustrated) for a set of said LEDs or lamp-bulbs of the type referred to as "mignon". Said support is designed to be inserted by snap action, or another equivalent system, in a seat 5 made on a component element 7, which is formed by a base 8 and a surface shaped so as to identify a set of half-dishes arranged in a row alongside one another. According to a first embodiment of the invention, the component element 7 is obtained by moulding in two symmetrical half-shells 12 and 13, which are divided substantially along a plane passing through the axes of symmetry of the reflecting dishes that said half-shells form when they are joined together.

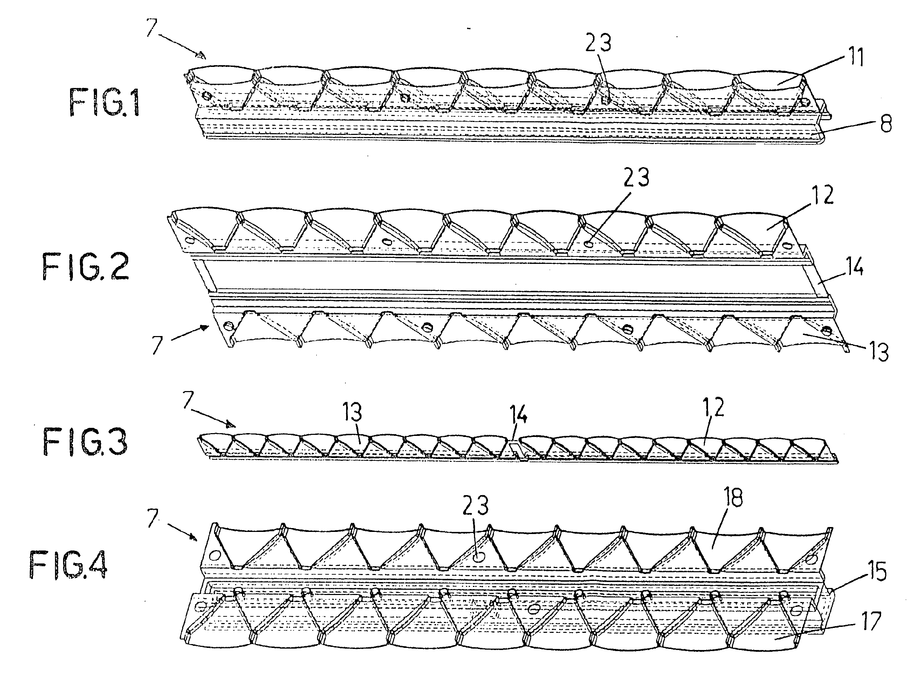

As may be seen in particular in Figure 2, the two half-shells are kept joined by machining bands or strips 14, set on their bottom edge, which can then be discarded at the moment of assembly of the light. A second embodiment of the half-shells 12 and 13, illustrated in particular in Figure 3, envisages that they will be kept joined together by strips connected to a side edge.

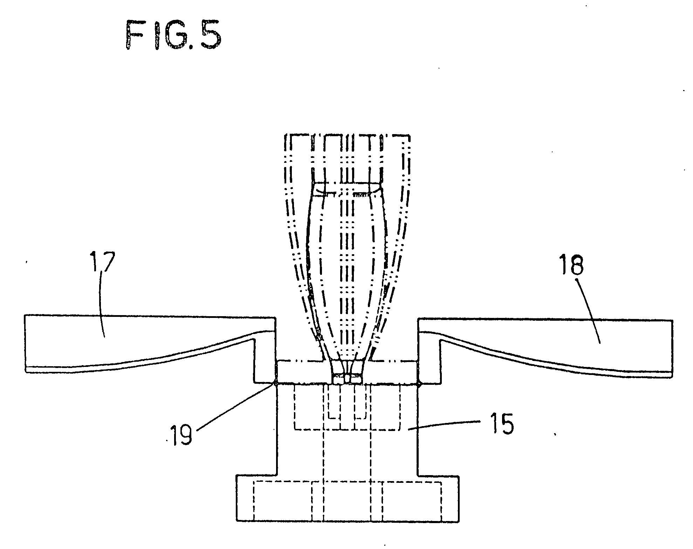

In a further embodiment illustrated in Figures 4 and 5, the base 15 of the component element 7 is made of a single piece, whereas the reflecting dishes 11 are formed by two half-shells 17 and 18 joined together at the base by thin-film hinges 19, which enable rotation of the half-shells with respect to the base. Of course, the reflecting dishes will have an appropriate shape in such a way that the lamp-bulb or the LED can be set in the desired position in order to transmit the beam of light in a suitable way.

The component element 7 is then inserted, in the step of assembly of the light, in a shell 20 provided with attachments 21 for mounting it on the motor vehicle. The shell is provided on its front part with a coloured lens 22, generally red, which hermetically seals the shell 20.

As has been said above and is more clearly visible in Figures 2 to 5, the reflecting dishes of the component element 7 are made of two symmetrical half-shells, in such a way that the aluminizing operation inside the reflecting dishes, which is necessary for providing brightness to the light, can be performed automatically with an operation that is much simpler and with qualitatively excellent results as compared to that for a closed reflecting dish.

Once the aluminizing operation is completed, the two half-shells are joined together and secured in this position, for example by means of rivets or snap-action hooks 23 or equivalent anchoring means, distributed throughout the length of the component element.

The above embodiment of the reflecting dishes of the light, in addition to facilitating the aluminizing process, enables reflecting dishes of reduced dimensions to be obtained, with optimized profiles which improve the efficiency of the light beam. In this way, given the same performance of the light, it is possible to use a smaller number of lamp-bulbs or LEDs, with lower power than the ones normally used. Said lamp-bulbs or LEDs hence have a lower level consumption and consequently lower operating temperatures, which enables use of a lower-quality plastic material with consequent reduction in costs.

It is understood that the invention is not limited to the embodiments described and illustrated herein, which are to be considered purely as possible examples of embodiment and which may instead undergo further modifications regarding shapes and arrangements of parts, and details of construction and assembly.

## Claims

1. A signalling light for motor vehicles, made up of: a support (1) for lamp-bulbs or LEDs (3); a component element (7), comprising a base (8, 15), with a seat (15) for the support (1) and a set of reflecting dishes (11) set in a row; a shell (20) designed to be inserted by snap action on the component element (7); and a lens (22) for closing the compartment defined by said shell (20); said signalling light being **characterized in that** the component element (7) is made up of two symmetrical half-shells (12, 13, 17, 18), basically divided along the plane passing through the axes of symmetry of the reflecting dishes, so that each of the two half-shells defines respective half-dishes designed to form said reflecting dishes when said half-shells are set facing one another.

2. The signalling light according to Claim 1, **characterized in that** the base (15) of the component element (7) is monolithic.

3. The signalling light according to Claims 1 and 2, **characterized in that** the half-shells can be joined together via snap-action means (23) or equivalent means of anchorage.

4. The signalling light according to Claim 1, **characterized in that** the support for the lamp-bulbs or LEDs (3) is connected by snap action to the component element (7).

5. The signalling light according to Claim 1, **characterized in that** it is made entirely of plastic material or the like.

6. The signalling light according to Claim 1, **characterized in that** present between the base (15) and the half-shells (17, 18) forming the reflecting dishes is a film hinge (19).
